# EUROPÄISCHE PATENTSCHRIFT

(11) **EP 3 196 604 B1**
(45) Veröffentlichungstag und Bekanntmachung des Hinweises auf die Patenterteilung: **04.03.2020**
(21) Anmeldenummer: 16203414.4
(22) Anmeldetag: 12.12.2016
(51) Int. Cl.: G01F 1/84, G01F 25/00

(54) **VERFAHREN ZUM BETREIBEN EINES CORIOLIS-MASSEDURCHFLUSSMESSGERÄTS UND DIESBEZÜGLICHES CORIOLIS-MASSEDURCHFLUSSMESSGERÄT**
METHOD FOR OPERATING A CORIOLIS MASS FLOW METER AND RELATED CORIOLIS MASS FLOW METER
PROCÉDÉ DE FONCTIONNEMENT D'UN DÉBITMÈTRE MASSIQUE À ACCÉLÉRATION DE CORIOLIS ET DÉBITMÈTRE MASSIQUE À ACCÉLÉRATION DE CORIOLIS CORRESPONDANT

(30) Priorität: 20.01.2016 DE 102016100951
(43) Veröffentlichungstag der Anmeldung: 26.07.2017
(73) Patentinhaber: Krohne Messtechnik GmbH, 47058 Duisburg (DE)
(72) Erfinder: Kolahi, Kourosh, 47051 Duisburg (DE); Storm, Ralf, 45131 Essen (DE)
(74) Vertreter: Gesthuysen Patent- und Rechtsanwälte

(56) Entgegenhaltungen:
- EP-A1- 2 706 327
- DE-A1-102007 061 585
- DE-A1-102012 109 729

## Beschreibung

Die Erfindung betrifft ein Verfahren zum Betreiben eines Coriolis-Massedurchflussmessgeräts mit mindestens einem Messrohr, mindestens einem Schwingungserreger, mindestens einem Schwingungssensor und mindestens einem Dehnungssensor, wobei der Schwingungserreger mit einem Schwingungserregersignal angesteuert wird und das Messrohr durch den Schwingungserreger zu einer Schwingung angeregt wird, wobei von dem Schwingungssensor die Schwingung des Messrohrs erfasst und ein Schwingungssensorsignal erzeugt wird und wobei der Dehnungssensor durch eine Verbindung mit dem Messrohr mechanisch gekoppelt ist.

Weiterhin betrifft die Erfindung ein Coriolis-Massedurchflussmessgerät mit mindestens einem Messrohr, mindestens einem Schwingungserreger, mindestens einem Schwingungssensor, mindestens einem Dehnungssensor und einer Auswerteeinheit, wobei der Schwingungserreger zur Anregung einer Schwingung des Messrohrs ausgebildet ist, wobei der Schwingungssensor zur Erfassung der Schwingung des Messrohrs und zur Erzeugung eines Schwingungssensorsignals ausgebildet ist, wobei der Dehnungssensor durch eine Verbindung mit dem Messrohr mechanisch gekoppelt ist und wobei die Auswerteeinheit zur Erzeugung eines Schwingungserregersignals und zur Ansteuerung des Schwingungserregers mit dem Schwingungserregersignal ausgebildet ist.

Das Funktionsprinzip des Coriolis-Massedurchflussmessgeräts ist, dass das von einem Medium durchströmte Messrohr durch den Schwingungserreger zu einer Schwingung angeregt wird, wobei die Schwingungsrichtung des Messrohrs und damit auch des im Messrohr strömenden Mediums zumindest eine zur Strömungsrichtung des Mediums im Messrohr orthogonale Komponente aufweist. Die orthogonale Komponente der Schwingung des im Messrohr strömenden Mediums ruft in dem strömenden Medium eine Coriolisträgheitskraft hervor, die der orthogonalen Komponente der Schwingung entgegen wirkt. Die Coriolisträgheitskraft verursacht, dass zwischen der Schwingung des Messrohrs an jeweils zwei verschiedenen Messrohrstellen entlang der Längsachse des Messrohrs eine Phasendifferenz auftritt, die proportional zum Massestrom des Mediums durch das Messrohr ist. Das Coriolis-Massedurchflussmessgerät misst die Phasendifferenz und bestimmt aus dieser den Massestrom des Mediums.

Der Dehnungssensor ist ein Sensor, der eine Dehnung seines Sensorkörpers misst. Damit der Dehnungssensor eine Dehnung des Messrohrs misst, muss der Sensorkörper durch die Verbindung mit dem Messrohr derart mechanisch gekoppelt sein, dass eine Dehnung des Messrohrs auf den Sensorkörper übertragen wird.

Aus der DE 10 2007 061 585 A1, der EP 2 706 327 A1 und auch aus der DE 10 2012 109 729 A1 ist jeweils ein Coriolis-Massedurchflussmessgerät mit separaten Schwingungs- und Dehnungssensoren bekannt, wobei das Dehnungssensorsignal dazu verwendet wird, das Schwingungssensorsignal um den Dehnungseinfluss zu korrigieren. Der mechanischen Verbindung des Dehnungssensors zum Messrohr selbst wird keine Beachtung geschenkt.

Aus der Praxis sind gattungsgemäße Coriolis-Massedurchflussmessgeräte bekannt, bei denen sich die mechanischen Kopplungen durch die Verbindungen verändert haben. Die Veränderungen der mechanischen Kopplungen durch die Verbindungen können verschiedene Ursachen haben. Mögliche Ursachen sind Alterung oder Ermüdung der Verbindungen oder äußere Einflüsse auf die Verbindungen. Die Veränderung der mechanischen Kopplung durch die Verbindung bewirkt, dass die von dem Dehnungssensor gemessene Dehnung nicht mehr der Dehnung des Messrohrs entspricht und die gemessene Dehnung folglich mit einem Fehler behaftet ist. Aus dem Stand der Technik ist nicht bekannt, wie die Veränderung der mechanischen Kopplung durch die Verbindung festgestellt werden kann.

Aufgabe der vorliegenden Erfindung ist deshalb, ein Verfahren zum Betreiben eines Coriolis-Massedurchflussmessgeräts sowie ein Coriolis-Massedurchflussmessgerät anzugeben, das den im Stand der Technik aufgezeigten Nachteil überwindet. Diese Aufgabe wird durch den Gegenstand der unabhängigen Ansprüche 1 und 7 gelöst. Weitere Ausführungsformen der Erfindung ergeben sich aus den abhängigen Ansprüchen 2-6 und 8-11.

Gemäß einer ersten Lehre bezieht sich die Erfindung auf ein Verfahren, bei dem die zuvor hergeleitete und aufgezeigte Aufgabe gelöst ist. Das erfindungsgemäße Verfahren ist zunächst und im Wesentlichen dadurch gekennzeichnet, dass von dem Dehnungssensor die Schwingung des Messrohrs gemessen und ein die Schwingung des Messrohrs repräsentierendes Dehnungssensorsignal erzeugt wird, dass eine Korrelation zwischen dem Dehnungssensorsignal und einem die Schwingung des Messrohrs repräsentierenden Schwingungssignal bestimmt wird und dass eine zeitliche Veränderung der Korrelation ermittelt wird.

Die Korrelation beschreibt den Zusammenhang zwischen dem Dehnungssensorsignal und dem Schwingungssignal und ist ein Maß für die Stärke des Zusammenhangs.

Die Ursache der zeitlichen Veränderung der Korrelation ist bei ansonsten gleichen Bedingungen eine Veränderung der mechanischen Kopplung durch die Verbindung. Die zeitliche Veränderung der Korrelation spiegelt eine Änderung des Dehnungssensorsignals relativ zum Schwingungssignal wider.

Eine Ausgestaltung des erfindungsgemäßen Verfahrens sieht vor, dass die Korrelation mit einer Referenzkorrelation verglichen wird und ein Überschreiten und/oder ein Unterschreiten der Referenzkorrelation signalisiert wird.

Eine weitere Ausgestaltung des erfindungsgemäßen Verfahrens sieht vor, dass die Schwingung des Messrohrs von dem Dehnungssensor bei Unterabtastung gemessen wird. Vorzugsweise wird die Bandbreite der Schwingung durch einen Bandpassfilter derart begrenzt, dass keine Alias-Effekte auftreten.

Eine weitere Ausgestaltung des Verfahrens sieht vor, dass eine Abnahme der Korrelation mit fortschreitender Zeit einer Abnahme der mechanischen Kopplung durch die Verbindung zugeordnet wird. Der Ausgestaltung liegt die Erkenntnis zugrunde, dass die mechanische Kopplung durch die Verbindung zumeist mit der Zeit abnimmt, weil sich die Verbindung zum Beispiel lockert. Die Abnahme der mechanischen Kopplung durch die Verbindung bewirkt eine verminderte Übertragung einer Dehnung des Messrohrs auf den Dehnungssensor, wodurch das Dehnungssensorsignal relativ zum Schwingungssignal vermindert ist. Die Ausgestaltung vereinfacht das erfindungsgemäße Verfahren dadurch, dass nur eine Abnahme der mechanischen Kopplung der Verbindung berücksichtigt wird.

Weitere Ausgestaltungen des Verfahrens sehen vor, dass das Schwingungssensorsignal und das Schwingungserregersignal als Schwingungssignal verwendet werden oder dass das Schwingungssensorsignal oder das Schwingungserregersignal als Schwingungssignal verwendet wird. Die Verwendung des Schwingungssensorsignals und/oder des Schwingungserregersignals als Schwingungssignale ist vorteilhaft, da diese in gattungsgemäßen Coriolis-Massedurchflussmessgeräten schon vorhanden sind.

Eine weitere Ausgestaltung sieht vor, dass das Schwingungssignal derart erzeugt wird, dass es die Geschwindigkeit der Schwingung des Messrohrs repräsentiert. Der Schwingung des Messrohrs kann an jedem Punkt auf dem Messrohr eine Auslenkung, eine Geschwindigkeit und eine Beschleunigung als Funktion der Zeit zugeordnet werden. Eine Alternative zur Ausgestaltung sieht demnach vor, dass das Schwingungssignal derart erzeugt wird, dass es die Auslenkung der Schwingung des Messrohrs repräsentiert. Eine weitere Alternative zur Ausgestaltung sieht vor, dass das Schwingungssignal derart erzeugt wird, dass es die Beschleunigung der Schwingung des Messrohrs repräsentiert. Es ist jedenfalls dann vorteilhaft, dass das Schwingungssignal derart erzeugt wird, dass es die Geschwindigkeit des Messrohrs repräsentiert, wenn der verwendete Schwingungssensor aufgrund des umgesetzten Messprinzips unmittelbar ein Schwingungssignal erzeugt, dass die Geschwindigkeit der Schwingung repräsentiert.

Eine weitere Ausgestaltung sieht vor, dass die Korrelation bestimmt wird, indem die Übertragungsfunktion zwischen dem Schwingungssignal und dem Dehnungssensorsignal bestimmt wird. Die Koeffizienten der Übertragungsfunktion sind ein Maß für die Stärke des Zusammenhangs zwischen dem Schwingungssignal und dem Dehnungssensorsignal.

Eine weitere Ausgestaltung sieht vor, dass die Korrelation bestimmt wird, indem aus dem Dehnungssensorsignal eine erste Amplitude der Schwingung des Messrohrs bestimmt wird, dass aus dem Schwingungssignal eine zweite Amplitude der Schwingung des Messrohrs bestimmt wird, dass die erste Amplitude und die zweite Amplitude zueinander in Bezug gesetzt werden und dass die Phase des Dehnungssensorsignals in Bezug auf das Schwingungssignal bestimmt wird. Der Bezug zwischen der ersten Amplitude und zweiten Amplitude und die Phase sind ein Maß für die Stärke des Zusammenhangs zwischen dem Schwingungssignal und dem Dehnungssensorsignal.

Eine weitere Ausgestaltung sieht vor, dass von dem Dehnungssensor im Messrohr auftretende mechanische Spannungen gemessen werden und die gemessenen aufgetretenen mechanischen Spannungen zur Kompensation der Wirkung der aufgetretenen mechanischen Spannungen auf die Schwingungssensorsignale verwendet werden. Vorzugsweise werden von dem Dehnungssensor axiale mechanische Verspannungen des Messrohrs gemessen. Demnach werden von dem Dehnungssensor sowohl die Schwingung des Messrohrs als auch mechanische Verspannungen im Messrohr gemessen.

Mechanische Spannungen beeinflussen die Schwingung des Messrohrs. Die beeinflusste Schwingung des Messrohrs wird von dem Schwingungssensor erfasst und der Schwingungssensor erzeugt ein die beeinflusste Schwingung repräsentierendes Schwingungssensorsignal, wobei aus dem Schwingungssensorsignal die Beeinflussung der Schwingung durch die mechanischen Spannungen im Messrohr nicht erkennbar ist. Zur Kompensation der Beeinflussung der Schwingung des Messrohrs durch die mechanischen Spannungen im Messrohr bedarf es deshalb eines Sensors, der die mechanischen Spannungen im Messrohr misst. Das ist vorliegend der Dehnungssensor.

Gemäß einer zweiten Lehre bezieht sich die Erfindung auf ein Coriolis-Massedurchflussmessgerät, bei dem die zuvor hergeleitete und aufgezeigte Aufgabe gelöst ist. Das erfindungsgemäße Coriolis-Massedurchflussmessgerät ist zunächst und im Wesentlichen dadurch gekennzeichnet, dass der Dehnungssensor zur Messung der Schwingung des Messrohrs und zur Ausgabe eines die Schwingung des Messrohrs repräsentierenden Dehnungssensorsignals ausgebildet ist und dass die Auswerteeinheit zur Bestimmung einer Korrelation zwischen dem Dehnungssensorsignal und einem die Schwingung des Messrohrs repräsentierenden Schwingungssignals und zur Ermittlung einer zeitlichen Veränderung der Korrelation ausgebildet ist.

Die Ausführungen zum erfindungsgemäßen Verfahren gelten entsprechend für das erfindungsgemäße Coriolis-Massedurchflussmessgerät und umgekehrt.

Eine Ausgestaltung des erfindungsgemäßen Coriolis-Massedurchflussmessgeräts sieht vor, dass die Auswerteeinheit und der Dehnungssensor zur Ausführung eines Verfahrens gemäß einer der vorangehenden Ausgestaltungen und Alternativen ausgebildet sind.

Eine weitere Ausgestaltung des Coriolis-Massedurchflussmessgerät sieht vor, dass der Dehnungssensor durch die Verbindung auf dem Messrohr angeordnet ist. In einer ersten Alternative ist vorgesehen, dass das Messrohr mit einem Träger vorzugsweise unmittelbar verbunden ist und der Dehnungssensor durch die Verbindung auf dem Träger angeordnet ist. In einer zweiten Alternative ist vorgesehen, dass das Messrohr mit einem Träger vorzugsweise unmittelbar verbunden ist und dass mindestens zwei Dehnungssensoren durch die Verbindungen auf dem durch das Messrohr und den Träger gebildeten Körper angeordnet sind.

Eine weitere Ausgestaltung sieht vor, dass die Verbindung durch Stoffschluss hergestellt ist, insbesondere durch Kleben. Eine Alternative sieht vor, dass die Verbindung durch Kraftschluss hergestellt ist, insbesondere durch Verschrauben. Der Vorteil der Verbindung durch Stoffschluss gegenüber der Verbindung durch Kraftschluss ist, dass die Verbindung flächig und nicht punktuell ist. Die flächige Verbindung bewirkt eine bessere Übertragung einer Dehnung des Messrohrs auf den Sensorkörper. Der Vorteil der Verbindung durch Kraftschluss gegenüber der Verbindung durch Stoffschluss ist die Demontierbarkeit des Dehnungssensors.

Eine weitere Ausgestaltung sieht vor, dass der Dehnungssensor ein Dehnungsmessstreifen ist. Ein Dehnungsmessstreifen ist aus elektrischer Sicht ein Widerstand, dessen Widerstandswert eine Funktion der auf den Widerstandskörper wirkenden mechanischen Spannung ist. Demnach repräsentiert das Dehnungssensorsignal den Widerstandswert.

Im Einzelnen ist eine Vielzahl von Möglichkeiten, das erfindungsgemäße Verfahren und das erfindungsgemäße Coriolis-Massedurchflussmessgerät auszugestalten und weiterzubilden, gegeben. Dazu wird verwiesen sowohl auf die den Patentansprüchen 1 und 8 nachgeordneten Patentansprüche als auch auf die nachfolgende Beschreibung eines bevorzugten Ausführungsbeispiels in Verbindung mit der Zeichnung. In der Zeichnung zeigen
- Fig. 1: das Ausführungsbeispiel des erfindungsgemäßen Coriolis-Massedurchflussmessgeräts und
- Fig. 2: den Dehnungssensor und einen Ausschnitt der Auswerteeinheit des Ausführungsbeispiels.

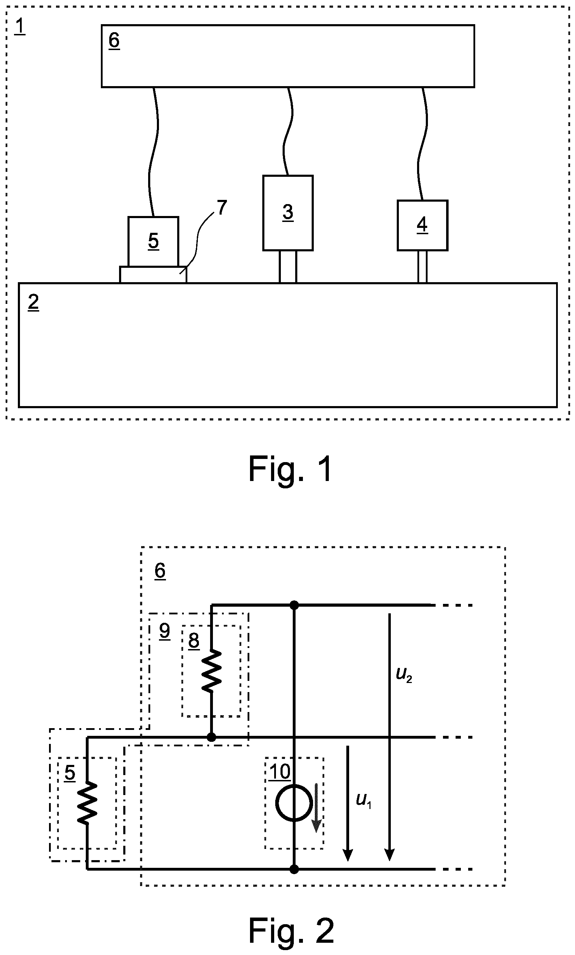

Fig.1 zeigt das Ausführungsbeispiel des erfindungsgemäßen Coriolis-Massedurchflussmessgerät 1 in schematischer Darstellung. Es weist ein Messrohr 2, einen Schwingungserreger 3, einen Schwingungssensor 4, einen Dehnungssensor 5 und eine Auswerteeinheit 6 auf.

Der Schwingungssensor 4 ist ein elektromagnetischer Geschwindigkeitssensor und erzeugt aufgrund seines Messprinzips unmittelbar ein Schwingungssensorsignal, das die Geschwindigkeit der Schwingung des Messrohrs 2 repräsentiert. Das Schwingungssensorsignal wird von der Auswerteeinrichtung 6 als das Schwingungssignal verwendet.

Der Dehnungssensor 5 ist ein Dehnungsmessstreifen und ist durch eine Verbindung 7 auf dem Messrohr 2 angeordnet und auf diese Weise mit dem Messrohr 2 mechanisch gekoppelt. Die Verbindung 7 ist durch Kleben hergestellt. Der Dehnungssensor 5 ist ausgebildet, sowohl die Schwingung des Messrohrs 2 als auch im Messrohr 2 auftretende mechanische Spannungen zu messen und ein sowohl die Schwingung als auch die mechanische Spannung repräsentierenden Widerstandswert als Dehnungssensorsignal zu erzeugen.

Fig. 2 zeigt den Dehnungssensor 5 und einen Ausschnitt der Auswerteeinheit 6. Der Dehnungssensor 5 und ein Widerstand 8 der Auswerteeinheit (6) bilden eine Reihenschaltung 9. Die Reihenschaltung 9 ist von einer Spannungsquelle 10 der Auswerteeinheit (6) gespeist. Die Auswerteeinheit 6 ist ausgebildet, die Spannung *u*₁ über dem Dehnungssensor und die Spannung *u*₂ über der Reihenschaltung 9 zu messen und aus den beiden Spannungen *u*₁, *u*₂ den Widerstandswert, also das Dehnungssensorsignal, des Dehnungssensors 5 zu bestimmen.

Darüber hinaus ist die Auswerteeinheit 6 zur Ausführung der folgenden Verfahrensschritte ausgebildet:
Erzeugung eines harmonischen Schwingungserregersignals und Ansteuerung des Schwingungserregers 3 mit dem Schwingungserregersignal, so dass das Messrohr 2 zu einer Schwingung angeregt wird.

Bestimmung einer Korrelation zwischen dem zeitlichen Verlauf des Dehnungssensorsignals und dem zeitlichen Verlauf des Schwingungssignals und Bestimmung der zeitlichen Veränderung der Korrelation.

In einer ersten Alternative erfolgt die Bestimmung, indem aus dem zeitlichen Verlauf des Dehnungssensorsignals eine erste Amplitude und aus dem zeitlichen Verlauf des Schwingungssignals eine zweite Amplitude bestimmt wird, die erste Amplitude und die zweite Amplitude zueinander in Bezug gesetzt werden und die Phase des zeitlichen Verlaufs des Dehnungssensorsignals in Bezug auf den zeitlichen Verlauf des Schwingungssignals bestimmt wird.

In einer zweiten Alternative erfolgt die Bestimmung, indem die Übertragungsfunktion zwischen dem zeitlichen Verlauf des Dehnungssensorsignals und dem zeitlichen Verlauf des Schwingungssignals bestimmt wird. Die Bestimmung umfasst die folgenden Verfahrensschritte: Aufteilung des zeitlichen Verlaufs des Dehnungssensorsignals in einen Gleichanteil und einen Wechselanteil, phasenselektive Gleichrichtung des zeitlichen Verlaufs des Wechselanteils in Bezug auf den zeitlichen Verlauf der Schwingungssignals und Berechnung der relativen komplexen Änderung des zeitlichen Verlaufs Dehnungssensorsignals in Bezug auf den zeitlichen Verlauf des Schwingungssignals. Die auf diese Weise gebildete komplexe Übertragungsfunktion ist ein Maß für die Korrelation. Je größer der Realteil der Übertragungsfunktion in Bezug auf den Imaginärteil der Übertragungsfunktion ist, desto höher ist Korrelation.

Die phasenselektive Gleichrichtung des zeitlichen Verlaufs des Wechselsignals in Bezug auf den zeitlichen Verlauf des Schwingungssignals bedeutet, dass zwischen dem zeitlichen Verlauf des Wechselsignals und dem zeitlichen Verlauf des Schwingungssignals eine konstante Phasendifferenz besteht. Vorzugsweise beträgt die Phasendifferenz 45°, da bei dieser Phasendifferenz der rechnerische Aufwand zur Bestimmung der Korrelation reduziert ist.

### Bezugszeichen:

- 1: Coriolis-Massedurchflussmessgerät
- 2: Messrohr
- 3: Schwingungserreger
- 4: Schwingungssensor
- 5: Dehnungssensor
- 6: Auswerteeinheit
- 7: Verbindung
- 8: Widerstand
- 9: Reihenschaltung
- 10: Spannungsquelle

## Patentansprüche

1. Verfahren zum Betreiben eines Coriolis-Massedurchflussmessgeräts (1) mit mindestens einem Messrohr (2), mindestens einem Schwingungserreger (3), mindestens einem Schwingungssensor (4) und mindestens einem Dehnungssensor (5),
wobei der Schwingungserreger (3) mit einem Schwingungserregersignal angesteuert wird und das Messrohr (2) durch den Schwingungserreger (3) zu einer Schwingung angeregt wird,
wobei von dem Schwingungssensor (4) die Schwingung des Messrohrs (2) erfasst und ein Schwingungssensorsignal erzeugt wird,
wobei der Dehnungssensor (5) durch eine Verbindung (7) mit dem Messrohr (2) mechanisch gekoppelt ist und
wobei von dem Dehnungssensor (5) die Schwingung des Messrohrs (2) gemessen und ein die Schwingung des Messrohrs (2) repräsentierendes Dehnungssensorsignal erzeugt wird,
**dadurch gekennzeichnet,**
**dass** eine Korrelation zwischen dem Dehnungssensorsignal und einem die Schwingung des Messrohrs (2) repräsentierenden Schwingungssignal bestimmt wird,
**dass** eine zeitliche Veränderung der Korrelation ermittelt wird und
**dass** eine Abnahme der Korrelation mit fortschreitender Zeit einer Abnahme der mechanischen Kopplung durch die Verbindung (7) zugeordnet wird.

2. Verfahren nach Anspruch 1, **dadurch gekennzeichnet, dass** das Schwingungssensorsignal und/oder das Schwingungserregersignal als das Schwingungssignal verwendet werden bzw. wird.

3. Verfahren nach einem der Ansprüche 1 bis 2, **dadurch gekennzeichnet, dass** das Schwingungssignal derart erzeugt wird, dass es die Geschwindigkeit der Schwingung des Messrohrs (2) repräsentiert.

4. Verfahren nach einem der Ansprüche 1 bis 3, **dadurch gekennzeichnet, dass** die Korrelation bestimmt wird, indem die Übertragungsfunktion zwischen dem Schwingungssignal und dem Dehnungssensorsignal bestimmt wird.

5. Verfahren nach einem der Ansprüche 1 bis 4, **dadurch gekennzeichnet, dass** die Korrelation bestimmt wird, indem aus dem Dehnungssensorsignal eine erste Amplitude der Schwingung des Messrohrs (2) bestimmt wird, dass aus dem Schwingungssignal eine zweite Amplitude der Schwingung des Messrohrs (2) bestimmt wird, dass die erste Amplitude und die zweite Amplitude zueinander in Bezug gesetzt werden und dass die Phase des Dehnungssignals in Bezug auf das Schwingungssignal bestimmt wird.

6. Verfahren nach einem der Ansprüche 1 bis 5, **dadurch gekennzeichnet, dass** von dem Dehnungssensor im Messrohr (2) auftretende mechanische Spannungen gemessen werden und die gemessenen aufgetretenen mechanischen Spannungen zur Kompensation der Wirkung der aufgetretenen mechanischen Spannungen auf die Schwingungssensorsignale verwendet werden.

7. Coriolis-Massedurchflussmessgerät (1) mit mindestens einem Messrohr (2), mindestens einem Schwingungserreger (3), mindestens einem Schwingungssensor (4), mindestens einem Dehnungssensor (5) und einer Auswerteeinheit (6),
wobei der Schwingungserreger (3) zur Anregung einer Schwingung des Messrohrs (2) ausgebildet ist,
wobei der Schwingungssensor (3) zur Erfassung der Schwingung des Messrohrs und zur Erzeugung eines Schwingungssensorsignals ausgebildet ist,
wobei der Dehnungssensor (5) durch eine Verbindung (7) mit dem Messrohr (2) mechanisch gekoppelt ist,
wobei die Auswerteeinheit (6) zur Erzeugung eines Schwingungserregersignals und zur Ansteuerung des Schwingungserregers (3) mit dem Schwingungserregersignal ausgebildet ist und
wobei der Dehnungssensor (5) zur Messung der Schwingung des Messrohrs (2) und zur Ausgabe eines die Schwingung des Messrohrs (2) repräsentierenden Dehnungssensorsignals ausgebildet ist,
**dadurch gekennzeichnet,**
**dass** die Auswerteeinheit (6) zur Bestimmung einer Korrelation zwischen dem Dehnungssensorsignal und einem die Schwingung des Messrohrs (2) repräsentierenden Schwingungssignals und zur Ermittlung einer zeitlichen Veränderung der Korrelation ausgebildet ist und dass eine Abnahme der Korrelation mit fortschreitender Zeit einer Abnahme der mechanischen Kopplung durch die Verbindung (7) zugeordnet wird.

8. Coriolis-Massedurchflussmessgerät (1) nach Anspruch 7, **dadurch gekennzeichnet, dass** das die Auswerteeinheit (6) und der Dehnungssensor (5) zur Ausführung eines Verfahrens gemäß einem der Ansprüche 2 bis 6 ausgebildet sind.

9. Coriolis-Massedurchflussmessgerät (1) nach Anspruch 7 oder 8, **dadurch gekennzeichnet, dass** der Dehnungssensor (5) durch die Verbindung (7) auf dem Messrohr (2) angeordnet ist.

10. Coriolis-Massedurchflussmessgerät (1) nach einem der Ansprüche 7 bis 9, **dadurch gekennzeichnet, dass** die Verbindung (7) durch Stoffschluss hergestellt ist, insbesondere durch Kleben.

11. Coriolis-Massedurchflussmessgerät (1) nach einem der Ansprüche 7 bis 10, **dadurch gekennzeichnet, dass** der Dehnungssensor (5) ein Dehnungsmessstreifen ist.

## Claims

1. Method for operating a Coriolis mass flowmeter (1) having at least one measuring tube (2), at least one oscillation generator (3), at least one oscillation sensor (4) and at least one strain sensor (5),
wherein the oscillation generator (3) is actuated with an oscillation excitation signal and the measuring tube (2) is excited to oscillation by the oscillation generator (3),
wherein the oscillation of the measuring tube (2) is detected by the oscillation sensor (4) and an oscillation sensor signal is generated,
wherein the strain sensor (5) is mechanically coupled to the measuring tube (2) via a connection (7), and
wherein the oscillation of the measuring tube (2) is measured by the strain sensor (5) and a strain sensor signal is generated representing the oscillation of the measuring tube (2)
**characterized in**
**that** a correlation between the strain sensor signal and an oscillation signal representing the oscillation of the measuring tube (2) is identified,
**that** a temporal change of the correlation is determined, and
**that** a decrease of the correlation with the passing of time is associated with a decrease in the mechanical coupling via the connection (7).

2. Method according to claim 1, **characterized in that** the oscillation sensor signal and/or the oscillation excitation signal is/are used as the oscillation signal.

3. Method according to any one of claims 1 to 2, **characterized in that** the oscillation signal is generated such that it represents the speed of the oscillation of the measuring tube (2).

4. Method according to any one of claims 1 to 3, **characterized in that** the correlation is identified **in that** the transfer function between the oscillation signal and the strain sensor signal is determined.

5. Method according to any one of claims 1 to 4, **characterized in that** the correlation is identified **in that** a first amplitude of the oscillation of the measuring tube (2) is determined from the strain sensor signal, that a second amplitude of the oscillation of the measuring tube (2) is determined from the oscillation signal, that the first amplitude and the second amplitude are set in relation to one another and that the phase of the strain signal is determined in respect to the oscillation signal.

6. Method according to any one of claims 1 to 5, **characterized in that** mechanical strains arising in the measuring tube (2) are measured by the strain sensor and the measured, arising mechanical strains are used for compensating the effect of the arising mechanical strains on the oscillation sensor signals.

7. Coriolis mass flowmeter (1) having at least one measuring tube (2), at least one oscillation generator (3), at least one oscillation sensor (4), at least one strain sensor (5) and an evaluation unit (6),
wherein the oscillation generator (3) is designed to excite the measuring tube (2) to oscillation,
wherein the oscillation sensor (3) is designed to detect the oscillation of the measuring tube and to generate an oscillation sensor signal,
wherein the strain sensor (5) is mechanically coupled to the measuring tube (3) via a connection (7),
wherein the evaluation unit (6) is designed to generate an oscillation excitation signal and to actuate the oscillation generator (3) with the oscillation excitation signal, and
wherein the strain sensor (5) is designed to measure the oscillation of the measuring tube (2) and to emit a strain sensor signal representing the oscillation of the measuring tube (2),
**characterized in**
**that** the evaluation unit (6) is designed to identify a correlation between the strain sensor signal and an oscillation signal representing the oscillation of the measuring tube (2) and to determine a temporal change of the correlation and that a decrease of the correlation with the passing of time is associated with a decrease in the mechanical coupling via the connection (7).

8. Coriolis mass flowmeter (1) according to claim 7, **characterized in that** the evaluation unit (6) and the strain sensor (5) are designed to carry out a method according to any one of claims 2 to 6.

9. Coriolis mass flowmeter (1) according to claim 7 or 8, **characterized in that** the strain sensor (5) is arranged on the measuring tube (2) via the connection (7).

10. Coriolis mass flowmeter (1) according to any one of claims 7 to 9, **characterized in that** the connection (7) is made using an adhesive bond, in particular by gluing.

11. Coriolis mass flowmeter (1) according to any one of claims 7 to 10, **characterized in that** the strain sensor (5) is a strain gauge.

## Revendications

1. Procédé de fonctionnement d'un débitmètre massique à accélération de Coriolis (1) comportant au moins un tube de mesure (2), au moins un dispositif d'excitation de vibration (3), au moins un capteur de vibration (4) et au moins un capteur de contrainte (5), dans lequel le dispositif d'excitation de vibration (3) est commandé par un signal de dispositif d'excitation de vibration et le tube de mesure (2) est excité en vibration par le dispositif d'excitation de vibration (3),
dans lequel la vibration du tube de mesure (2) est détectée par le capteur de vibration (4) et un signal de capteur de vibration est généré,
dans lequel le capteur de contrainte (5) est couplé mécaniquement au tube de mesure (2) par le biais d'une liaison (7) et
dans lequel la vibration du tube de mesure (2) est mesurée par le capteur de contrainte (5) et un signal de capteur de contrainte représentant la vibration du tube de mesure (2) est généré,
**caractérisé en ce qu'**une corrélation est déterminée entre le signal de capteur de contrainte et un signal de vibration représentant la vibration du tube de mesure (2),
**en ce qu'**une variation temporelle de la corrélation est déterminée et
**en ce qu'**une diminution de la corrélation avec le temps est associée à une diminution du couplage mécanique par le biais de la liaison (7).

2. Procédé selon la revendication 1, **caractérisé en ce que** le signal de capteur de vibration et/ou le signal de dispositif d'excitation de vibration est/sont utilisé(s) comme signal de vibration.

3. Procédé selon l'une des revendications 1 à 2, **caractérisé en ce que** le signal de vibration est généré de telle manière qu'il représente la vitesse de vibration du tube de mesure (2).

4. Procédé selon l'une des revendications 1 à 3, **caractérisé en ce que** la corrélation est déterminée en déterminant la fonction de transfert entre le signal de vibration et le signal de capteur de contrainte.

5. Procédé selon l'une des revendications 1 à 4, **caractérisé en ce que** la corrélation est déterminée en déterminant une première amplitude de la vibration du tube de mesure (2) à partir du signal de capteur de contrainte, **en ce qu'**une seconde amplitude de la vibration du tube de mesure (2) est déterminée à partir du signal de vibration, **en ce que** la première amplitude et la seconde amplitude sont mises en relation l'une avec l'autre et **en ce que** la phase du signal de contrainte est déterminée par rapport au signal de vibration.

6. Procédé selon l'une des revendications 1 à 5, **caractérisé en ce que** les contraintes mécaniques produites dans le tube de mesure (2) sont mesurées par le capteur de contrainte et les contraintes mécaniques produites mesurées sont utilisées pour compenser l'effet des contraintes mécaniques produites sur les signaux de capteur de vibration.

7. Débitmètre massique à accélération de Coriolis (1) comportant au moins un tube de mesure (2), au moins un dispositif d'excitation de vibration (3), au moins un capteur de vibration (4), au moins un capteur de contrainte (5) et une unité d'évaluation (6),
dans lequel le dispositif d'excitation de vibration (3) est conçu pour exciter une vibration du tube de mesure (2),
dans lequel le capteur de vibration (3) est conçu pour détecter la vibration du tube de mesure et pour générer un signal de capteur de vibration,
dans lequel le capteur de contrainte (5) est couplé mécaniquement au tube de mesure (2) par une liaison (7),
dans lequel l'unité d'évaluation (6) est conçue pour générer un signal d'excitation de vibration et pour commander le dispositif d'excitation de vibration (3) avec le signal d'excitation de vibration et
dans lequel le capteur de contrainte (5) est conçu pour mesurer la vibration du tube de mesure (2) et pour délivrer un signal de capteur de contrainte représentant la vibration du tube de mesure (2), **caractérisé en ce que** l'unité d'évaluation (6) est conçue pour déterminer une corrélation entre le signal de capteur de contrainte et un signal de vibration représentant la vibration du tube de mesure (2) et pour déterminer une variation temporelle de la corrélation et **en ce qu'**une diminution de la corrélation avec le temps est associée à une diminution du couplage mécanique par le biais de la liaison (7).

8. Débitmètre massique à accélération de Coriolis (1) selon la revendication 7, **caractérisé en ce que** l'unité d'évaluation (6) et le capteur de contrainte (5) sont conçus pour mettre en œuvre un procédé selon l'une des revendications 2 à 6.

9. Débitmètre massique à accélération de Coriolis (1) selon la revendication 7 ou 8, **caractérisé en ce que** le capteur de contrainte (5) est disposé sur le tube de mesure (2) par le biais de la liaison (7).

10. Débitmètre massique à accélération de Coriolis (1) selon l'une des revendications 7 à 9, **caractérisé en ce que** la liaison (7) est réalisée par complémentarité de matériaux, en particulier par collage.

11. Débitmètre massique à accélération de Coriolis (1) selon l'une des revendications 7 à 10, **caractérisé en ce que** le capteur de contrainte (5) est une jauge de contrainte.
